(19) Europäisches Patentamt
European Patent Office
Office européen des brevets

(11) **EP 2 753 044 A1**

(12) **EUROPEAN PATENT APPLICATION**
published in accordance with Art. 153(4) EPC

(43) Date of publication:
**09.07.2014 Bulletin 2014/28**

(51) Int Cl.:
***H04L 29/08*** *(2006.01)*

(21) Application number: **11864723.9**

(22) Date of filing: **30.09.2011**

(86) International application number:
**PCT/CN2011/080464**

(87) International publication number:
**WO 2012/149789 (08.11.2012 Gazette 2012/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd.**
**Shenzhen, Guangdong 518129 (CN)**

(72) Inventors:
• **WANG, Donghui**
  **Shenzhen**
  **Guangdong 518129 (CN)**

• **WU, Xiaoxin**
  **Shenzhen**
  **Guangdong 518129 (CN)**
• **WANG, Jiao**
  **Shenzhen**
  **Guangdong 518129 (CN)**

(74) Representative: **Körber, Martin Hans**
  **Mitscherlich PartmbB**
  **Patent- und Rechtsanwälte**
  **Sonnenstrasse 33**
  **80331 München (DE)**

(54) **METHOD AND DEVICE FOR RESOURCE MATCHING IN VPC MIGRATION**

(57)     Embodiments of the present invention provide a method and an apparatus for resource matching in VPC migration. The method includes: acquiring a node attribute, a link attribute and an adjacent matrix of a customized network requiring VPC migration according to a VPC migration request, where the node attribute includes a network security device attribute of the customized network, and further acquiring a node attribute, a link attribute and an adjacent matrix of a cloud network in which the VPC is located, where the adjacent matrices are used for indicating a connection between nodes; obtaining multiple matching resources in the cloud network according to a subgraph isomorphism algorithm, where the matching resources correspondingly match the node attribute, the link attribute and the adjacent matrix of the customized network, and selecting one of the multiple matching resources as a VPC into which the customized network migrates. The embodiments of the present invention improve the resource matching efficiency and precision in VPC migration, and meet requirement of guaranteeing the network security.

FIG. 1

Printed by Jouve, 75001 PARIS (FR)

## Description

## TECHNICAL FIELD

The present invention relates to information technologies, and in particular to a method and an apparatus for resource matching in VPC migration.

## BACKGROUND

A cloud is resources on a server cluster over the Internet, including hardware resources and software resources, and may be used for providing computing processing for users. Cloud computing, developed from distributed computing and parallel processing and the like, is a novel commercial computing model utilizing resources in the cloud. A cloud computing provider provides technology developers or enterprise users with services such as data storage, analysis and computing generally for free or for rent on demand. In cloud computing, a virtual private cloud (virtual private cloud, VPC for short) has strong isolation, where a cluster and a data center constructed by a user are taken as an independent and isolated subset of the cloud service, and resources therein are relatively controllable to the user. With expansion of enterprise networks and the growing requirements on network performance, in order to seek a greater storage space and computing power, more and more enterprises will select their networks (which may be referred to as customized networks) to be deployed in the cloud as a VPC. For example, the VPC may be directly deployed in the cloud, an original network may be migrated to the cloud, or the VPC may be migrated between clouds provided by two cloud providers; all of the above manners may be referred to as VPC migration.

In the prior art, for the above VPC migration, it is necessary to search the cloud for matching resources, that is, it is necessary to search the cloud for resources that match network attributes such as a node and a link of the customized network of the user, so that the VPC into which the customized network will finally migrate meets network customization of the user. The matching resources in the cloud herein refer to the cloud network matching the customized network of the user and including matching nodes, matching links, and the like. The search for the matching resources is generally performed in a two-layer matching manner, namely, node matching and link matching: Node matching is performed first; nodes in the cloud may be sequenced based on a certain node attribute such as the computing power according to a user network requirement, and a search for a node matching each node in the customized network is carried out in sequence; if no matching node is found, VPC migration is rejected; if a matching node is found, the search is generally stopped once one matching node is found sequentially and then it is determined whether a link the nodes found in the cloud matches a link between nodes in the customized network is matched, if yes, VPC migration can be implemented, and if no, VPC migration is rejected directly. The node in the customized network is generally a terminal server.

The prior art has the following technical defects: During resource matching in VPC migration, the search is generally stopped when one matching manner meeting the requirement is found, and therefore only one result is found in the above matching manner. However, it is not guaranteed that the obtained matching result meets the selection criteria of the cloud computing provider. For example, the cloud computing service provider prefers a bandwidth-saving matching manner; however, in the above resource matching, selection is based on the user requirement, and the nodes according to the obtained matching result may be far away from each other, which causes a waste of bandwidth, is adverse to the network bandwidth allocation of the cloud computing service provider, and the resource matching cannot be highly optimized. Moreover, during resource matching, only resources matching the terminal server of the customized network are found in the cloud, which cannot guarantee the security capability of the original network after the migration.

## SUMMARY

Embodiments of the present invention provide a method and an apparatus for resource matching in VPC migration, so as to optimize resource matching in VPC migration, and satisfy the requirement for guaranteeing network security.

An embodiment of the present invention provides a method for resource matching in VPC migration, which includes:

acquiring, a node attribute, a link attribute and an adjacent matrix of a customized network requiring VPC migration according to a VPC migration request, where the node attribute includes a network security device attribute of the customized network, and further acquiring a node attribute, a link attribute and an adjacent matrix of a cloud network in which the VPC is located, where the adjacent matrices are used for indicating a connection between nodes; and obtaining multiple matching resources in the cloud network according to a subgraph isomorphism algorithm, where the matching resources correspondingly match the node attribute, the link attribute and the adjacent matrix of the customized network, and selecting one of the multiple matching resources as a VPC into which the customized network migrates.

An embodiment of the present invention provides an apparatus for resource matching in VPC migration, which includes:

a request processing unit, configured to receive a VPC migration request;

a topology abstraction unit, configured to acquire a node attribute, a link attribute and an adjacent matrix of a customized network requiring VPC migration according to the VPC migration request, where the node attribute includes a network security device attribute of the customized network, and further acquire a node attribute, a link attribute and an adjacent matrix of a cloud network in which the VPC is located, where the adjacent matrices are used for indicating a connection between the nodes;

a physical matching unit, configured to obtain multiple matching resources in the cloud network according to a subgraph isomorphism algorithm, where the matching resources correspondingly match the node attribute, the link attribute and the adjacent matrix of the customized network; and

a result estimating unit, configured to select one of the multiple matching resources as a VPC into which the customized network migrates.

In the method and apparatus for resource matching in VPC migration provided by the embodiments of the present invention, resources matching the customized network are calculated according to the subgraph isomorphism algorithm, and the network security device is also abstracted into a node, so that multiple matching results may be obtained at the same time, thereby optimizing the resource matching in VPC migration, and satisfying the requirement for guaranteeing network security.

## BRIEF DESCRIPTION OF DRAWINGS

To illustrate the technical solutions in the embodiments of the present invention or in the prior art more clearly, the accompanying drawings required for describing the embodiments are briefly described in the following. Apparently, the accompanying drawings in the following description show merely some embodiments of the present invention, and a person of ordinary skill in the art may still derive other drawings from these accompanying drawings without creative efforts.

FIG. 1 is a schematic flow chart of an embodiment of a method for resource matching in VPC migration according to the present invention;
FIG. 2 is a schematic flow chart of another embodiment of a method for resource matching in VPC migration according to the present invention; and
FIG. 3 is a schematic structural diagram of an embodiment of an apparatus for resource matching in VPC migration according to the present invention.

## DESCRIPTION OF EMBODIMENTS

To make the objectives, technical solutions, and advantages of the embodiments of the present invention more comprehensible, the technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

## Embodiment 1

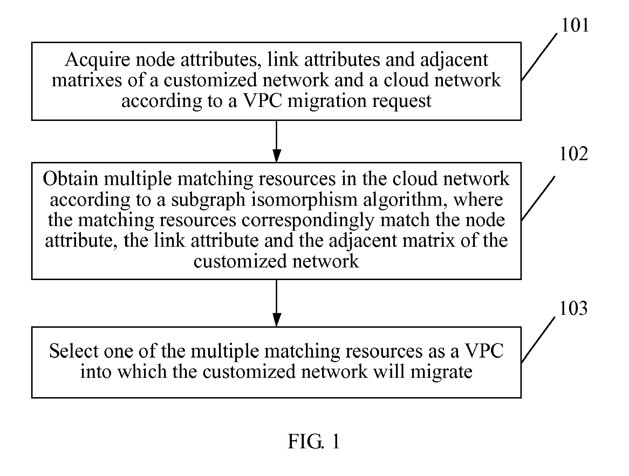

FIG. 1 is a schematic flow chart of an embodiment of a method for resource matching in VPC migration according to the present invention; the method may be performed by an apparatus for resource matching in Embodiment 3 of the present invention. As shown in FIG. 1, the method may include the following steps:

101. Acquire node attributes, link attributes and adjacent matrices of a customized network and a cloud network according to a VPC migration request.

The node attribute, the link attribute and the adjacent matrix of the network may be defined according to network requirements customized by a user. The node attribute may include a network security device attribute of the customized network, that is, a security device in the network is also abstracted into a node. The network security device attribute may include, for example, a type, a model, and a security policy of the security device. As the network security device is also abstracted into a node and put into a network topology, this may ensure that the security attribute remains unchanged in VPC migration and guarantee network security performance.

The link attribute may include, for example, bandwidth, a delay, and a distance of a link, and the like; the adjacent matrix is used for indicating a connection between every two nodes in the customized network. In addition, in this step, the customized network needs to be migrated to the VPC in the cloud network; therefore, a node attribute, a link attribute, and an adjacent matrix of the cloud network in which the VPC is located are further acquired.

102. Obtain multiple matching resources in the cloud network according to a subgraph isomorphism algorithm, where the matching resources correspondingly match the node attribute, the link attribute and the adjacent matrix of the customized network.

Multiple matching resources matching the attributes of the customized network can be obtained in the cloud network according to the subgraph isomorphism algorithm. For example, the cloud network in 101 is equivalent to a supergraph, and the customized network is equivalent to a subgraph; by using the subgraph isomorphism algorithm, it is obtained that multiple subgraphs in the supergraph all match the subgraph abstracted from the customized network. Compared with the matching manner in the prior art, all matching results can be obtained at the same time, and the cloud computing provider may select an optimal solution therein, so that the matching result for VPC migration is more beneficial.

103. Select one of the multiple matching resources as a VPC into which the customized network migrates.

In the method for resource matching in VPC migration according to this embodiment, resources matching a customized network are calculated according to a subgraph isomorphism algorithm, and a network security device is also abstracted into a node, so that all matching results can be obtained at the same time; a cloud computing provider may select an optimal solution therein, so that the matching result for VPC migration is more beneficial, and the requirement for guaranteeing network security is satisfied.

**Embodiment 2**

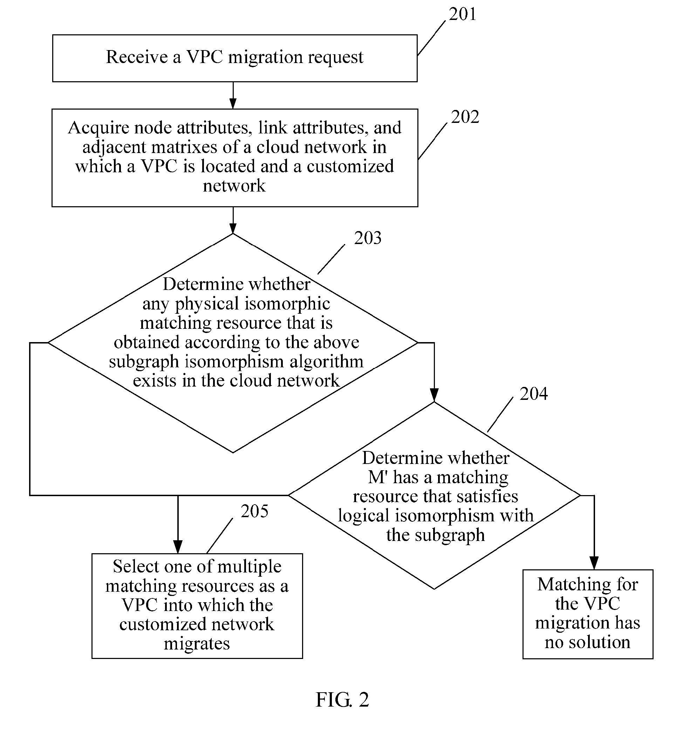

FIG. 2 is a schematic flow chart of another embodiment of a method for resource matching in VPC migration according to the present invention. This embodiment is a specific illustration for the method in Embodiment 1. As shown in FIG. 2, the method may include the following steps:

201. Receive a VPC migration request.

An apparatus for resource matching according to Embodiment 3 may receive the VPC migration request of a customized network of a user, where the request may include a user requirement on the customized network, for example, a node attribute, a link attribute, and the like of the customized network.

In this step, if multiple VPC migration requests are received, the VPC migration requests are sequentially processed on the basis of a first-received first-processed principle, which, compared with the prior art where the VPC migration requests are sequenced according to a descending order of migration gains, realizes fair processing for various VPC migration requests.

202. Acquire node attributes, link attributes, and adjacent matrices of a cloud network in which a VPC is located and a customized network.

The nodes referred to in node attributes in 202 include a network security device and a terminal server in the customized network; the network security device is virtualized as a network node, and the network security device is also made to correspond to a cloud node that has the same security guarantee as the network security device, so as to satisfy the network security in the migration process. The above network security device is a node considered for the purpose of security and having a security capability, but is not a specific physical security device. For example, devices such as a switch and a router that provide a forwarding function cannot be called network security devices, but a network intermediate device (such as a router) that functions as a firewall can guarantee network security and therefore may also be called a network security device and virtualized as a node.

For example, attributes of the network security device may include a type of the security device, a model of the security device, a security device policy in a specific network topology, and the like; attributes of the terminal server may include a terminal type, terminal computing power, terminal storage capacity, whether the terminal can further accommodate any migrated virtual machine, and the like. The link attribute includes a network characteristic and a non-network characteristic, where the network characteristic may include bandwidth, a delay and the like of the link, and the non-network characteristic of the link may include expense, a distance and the like of the link.

Content included in the node attribute and the link attribute is not limited to the part listed above. Moreover, considering multiple attributes of the terminal server is good for satisfying different requirements of clients. For example, if the terminal computing power is more emphasized in the customized network of a client, a resource with stronger computing power may be selected from multiple subsequently obtained matching resources; if the terminal storage capacity is more emphasized in the customized network of a client, a matching resource may be selected according to the terminal storage capacity.

The customized network may be abstracted into an undirected topology view according to the node attribute and the link attribute. Nodes and links in the topology view are granted the above attributes; the cloud network is also abstracted into a topology view having the node attribute and the link attribute; the topology view of the customized network may be referred to as a subgraph, and the topology view of the cloud network may be referred to as a supergraph.

Connections between every two nodes in the abstracted subgraph and connections between every two nodes in the abstracted supergraph may be indicated by adjacent matrices. The adjacent matrix identifies whether a link relationship exists between any two nodes, and is an undirected and unweighted graph. The adjacent matrix is a square matrix; for example, the adjacent matrix of the subgraph may be a square matrix with n dimensions, and the adjacent matrix of the supergraph may be a square matrix with m dimensions; an element at column 3 line 1 (it is assumed that n is greater than 3) of the adjacent matrix of the subgraph indicates that a connection exists between a first node and a third node in the subgraph (a node identity may be predefined).

203. Search the cloud network for a matching resource according to a subgraph isomorphism algorithm, where the matching resource correspondingly matches the node attribute, the link attribute, and the adjacent matrix of the customized network, and determine whether any physical isomorphic matching resource obtained according to the above subgraph isomorphism algorithm exists in the cloud network.

An ullmann subgraph isomorphism algorithm may be used; node matching is performed by using the ullmann algorithm, and it is verified whether the matching node satisfies a link requirement. The input of the algorithm is the node attribute, the link attribute, and the adjacent matrix of the subgraph, as well as the node attribute, the link attribute, and the adjacent matrix of the supergraph, which are obtained in the above step; the output of the algorithm is all graphs in the supergraph, which are isomorphic with the subgraph, namely, resources matching each attribute of the subgraph.

Specifically, first of all, a matrix M is constructed, and the matrix M is an n*m matrix identifying whether the subgraph nodes match the supergraph nodes, where all elements in the matrix are 1 or 0. If $M_{ij} = 1$, it identifies that an $i^{th}$ node in the subgraph matches a $j^{th}$ node in the supergraph, that is, the node attribute of the $j^{th}$ node in the supergraph satisfies the requirement of the node attribute of the $i^{th}$ node in the subgraph.

For example, for any node i in the subgraph, nodes in the supergraph are traversed; for a node t in the supergraph, a node attribute set of the subgraph node i and the supergraph node t is acquired and it is sequentially determined whether the supergraph node t satisfies all attributes of the subgraph node i; if all the attributes are satisfied, $M_{it}$ is set to 1; if a certain attribute is not satisfied, $M_{it}$ is set to 0. For example, the attribute of a subgraph node i is defined as {2VM to be migrated}, and the attribute of a supergraph node j is defined as {acceptable migration: 3VM}; in this case, the subgraph node i can match the supergraph node j, and $M_{ij} = 1$. The node attribute of a supergraph node k is defined as {acceptable migration: 1VM}; in this case, the subgraph node i cannot match the supergraph node k, and $M_{ik} = 0$. The above operation is executed repeatedly on all subgraph nodes sequentially until all the subgraph nodes undergo the calculation; the matrix M is saved.

Subsequently, a series of matrices M' are generated from M according to the ullmann algorithm; the M' marks one-to-one mapping from subgraph nodes to supergraph nodes. M' is a matrix having the following characteristics: M' is an n*m-order matrix formed of 1 or 0; each line of M' has one 1 only, identifying that each subgraph node corresponds to one and only one supergraph node; each column of M' has one 1 at most, identifying that each supergraph node corresponds to one or more subgraph nodes; $M'_{ij}$ is equal to 1, identifying that a subgraph node i correspondingly matches a supergraph node j. In other words, the matrix M is a set of all matrices in the supergraph that satisfy node matching with the subgraph, and the transformation from M to M' is equivalent to splitting the multiple matrices satisfying the node matching into separate matrices, where each matrix has uniquely corresponds to the subgraph.

For example, the calculation from M to a series of M' is an iteration process. For example, matrix

$$M = \begin{pmatrix} 1 & 0 & 0 & 1 \\ 0 & 1 & 0 & 0 \\ 0 & 0 & 1 & 0 \end{pmatrix}$$, and after iterative transformation, matrices M'(1) and M'(2) are generated, where

$$M'(1) = \begin{pmatrix} 1 & 0 & 0 & 0 \\ 0 & 1 & 0 & 0 \\ 0 & 0 & 1 & 0 \end{pmatrix}$$, and

$$M'(2) = \begin{pmatrix} 0 & 0 & 0 & 1 \\ 0 & 1 & 0 & 0 \\ 0 & 0 & 1 & 0 \end{pmatrix}.$$

Then, all the matrices M' generated from M and satisfying the node matching requirement are verified one by one that whether the link attribute requirement is satisfied. The verification may be performed according to the link attribute and the adjacent matrix. For example, the first node and the third node in the adjacent matrix of the subgraph have a link relationship; then, regarding M', it is assumed that a node A in M' matches the first node in the subgraph and a node B in M' matches the third node in the subgraph; if the node A and the node B directly have a direct link relationship, the adjacent matrix requirement of the subgraph is satisfied. Further, it is determined whether the link attribute of the link between the node A and the node B satisfies the attribute of the link between the first node and the third node in the subgraph; if yes, it indicates that the link satisfies the link characteristic; otherwise, the link does not satisfy the link characteristic.

Based on the above method, it is verified whether all link characteristics in M' match the subgraph. If the link relationship is satisfied, it indicates that an appropriate matching resource is found, that is, the matching resource represented by M' satisfies all attribute requirements of the subgraph, and a customized network represented by the subgraph can be migrated or deployed into the VPC represented by the M'; if the link relationship is not satisfied, it proves that the matching relationship represented by the current M' cannot be migrated or deployed.

Finally, after verification is performed on all M', if a VPC that is represented by one or more matrices M' and satisfies the requirement of the customized network is found, 205 is performed; if none of VPCs represented by the M' satisfies the requirement of the customized network, 204 is performed.

204. Determine, according to a logical isomorphism algorithm, whether M' has a matching resource that satisfies logical isomorphism with the subgraph.

If none of the M' calculated using the ullmann algorithm in 203 satisfies an M' required by the link of the customized network, in this embodiment, a logical matching algorithm is utilized to search for a logical matching result. The logical isomorphism algorithm is a method for establishing a logical link between two nodes that do not have a direct physical link through one-hop or multi-hop forwarding, which realizes the expansion from complete physical isomorphism to logical isomorphism. The matching probability of VPC migration may be further expanded by searching for a matching resource through logical isomorphism.

Specifically, an initial resource matching the node attribute of the customized network is acquired from the cloud network. The initial resource refers to a relatively closer M', and being relatively closer means that: For example, if one M' has three links dissatisfying the link attribute and another M' has one link dissatisfying the link attribute, apparently the M' with one link dissatisfying the link attribute is selected as the relatively closer M'. In this step, the M' does not have two points that have a direct link relationship and satisfy the link attribute, so a shortest path between two points without a direct link can be calculated according to a Dijstra algorithm, where the shortest path achieves a multi-hop link between the two points and satisfies the requirement of the link attribute.

For example, if a shortest path is found between two points and the link of the shortest path satisfies the link requirement {such as the bandwidth, delay, and expense} in the subgraph, it indicates that the two points in the supergraph may satisfy logical matching through multiple hops, and a point on the shortest path is an intermediate node in a multi-hop result; if no shortest path is found between the two points, it indicates that the current M' does not satisfy the logical matching requirement. If a shortest path is found in an M', the M' is used as a logical matching result, namely, the matching resource, and logical isomorphism operation in a next M' is started. In 203, each time an M' dissatisfying physical isomorphism is obtained, logical isomorphism of the M' may be calculated; alternatively, logical isomorphism of each M' may be uniformly calculated one by one after all matrices M' dissatisfying the isomorphism are found out in the supergraph.

If an M' satisfying the logical isomorphism can be obtained, 205 is performed; otherwise, if the shortest path is not found in each M', it indicates that the M' neither satisfies physical isomorphism nor satisfies logical isomorphism, and indicates that the customization requirement of the VPC is unsuccessful, and matching for the VPC migration has no solution.

205. Select one of the multiple matching resources as a VPC into which the customized network migrates.

In 203 or 204, multiple matching resources may be found in the supergraph; in this step, one of the multiple matching resources may be selected as a VPC into which the customized network migrates. A most suitable matching manner may be selected according to an actual requirement. Specifically, selection may be performed according to the node attribute and the link attribute of the matching resources. The actual requirement refers to a requirement of a cloud computing provider. First of all, all matching resources calculated according to the algorithm satisfy a deployment requirement of the customized network of the user, and then, the cloud computing provider will select a matching resource among all the matching resources that is more beneficial to them, so as to facilitate optimized deployment of cloud resources.

For example, relatively idle nodes may be selected preferentially to guarantee load balance of cloud nodes, which may be determined according to the characteristic, among the node attribute of the matching resources, about the number of migrating virtual machines that the terminal is capable of further accommodating. Relatively busy nodes may be selected preferentially to guarantee a highest utilization rate of the cloud nodes, which may also be determined according to the characteristic, among the node attribute of the matching resources, about the number of migrating virtual machines that the terminal is capable of further accommodating. A solution with least routing hops may be selected preferentially to save bandwidth, which may be determined according to the characteristic about a distance among the link attribute of the matching resources. Specifically, for example, a node 1 and a node 2 both satisfy a requirement of a client; the node 1 already has one running virtual machine, while the node 2 does not. If the cloud computing provider prefers using a matching manner with a relatively high utilization rate, the cloud computing provider will choose the node 1 for the deployment thereof; if the cloud computing provider prefers load balance, the cloud computing provider will choose the node 2 for the deployment thereof.

Further, after one of the multiple matching resources is selected as the VPC into which the customized network migrates, the node attribute, the link attribute and the adjacent matrix of the cloud network may be updated according to the finally selected VPC. For example, the selected VPC includes a node D; before the node D is used as a node into which the customized network migrates, the attribute thereof includes "capable of accommodating six virtual machines", and after the selection, the above attribute needs to be updated to "capable of accommodating 5 virtual machines". Only in this way can the cloud network ensure, when being used for VPC migration processing of customized networks of another user next time, correct attribute data so as to obtain a correct resource matching result for VPC migration. Similarly, other attribute data in the cloud network is updated.

In the method for resource matching in VPC migration according to this embodiment, resources matching a customized network are calculated according to a subgraph isomorphism algorithm, and a network security device is also abstracted into a node, so that all matching results can be obtained at the same time; a cloud computing provider may select an optimal solution therein, so that the matching result for VPC migration is more beneficial, and the requirement for guaranteeing network security is satisfied.

**Embodiment 3**

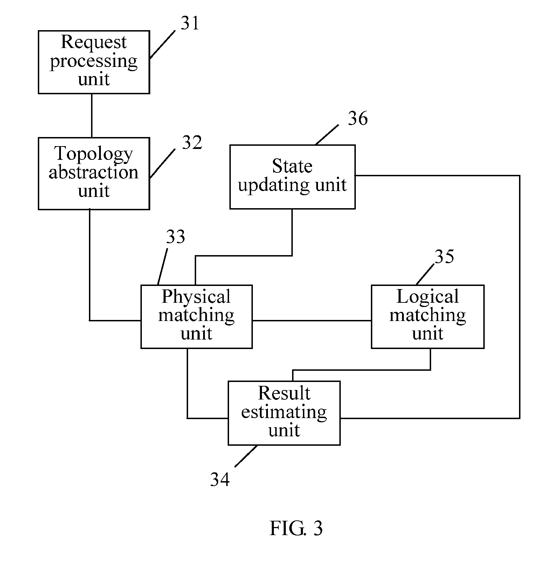

FIG. 3 is a schematic structural diagram of an embodiment of an apparatus for resource matching in VPC migration according to the present invention. The apparatus for resource matching may execute the method for resource matching in any embodiment of the present invention. The apparatus may be set at a cloud provider side in specific implementation; after receiving a VPC migration request from a user, a cloud provider may use this apparatus to perform resource matching processing in VPC migration.

The structure of the apparatus is briefly described in this embodiment; for specific action principles between the modules, reference may be made to the description in any method embodiment of the present invention. As shown in FIG. 3, the apparatus may include a request processing unit 31, a topology abstraction unit 32, a physical matching unit 33, and a result estimating unit 34.

The request processing unit 31 is configured to receive a VPC migration request.

The topology abstraction unit 32 is configured to acquire a node attribute, a link attribute and an adjacent matrix of a customized network requiring VPC migration according to the VPC migration request, where the node attribute includes a network security device attribute of the customized network, and further acquire a node attribute, a link attribute and an adjacent matrix of a cloud network in which the VPC is located, where the adjacent matrices are used for indicating a connection between the nodes.

The node attribute may further include a terminal server attribute of the customized network; the terminal server attribute includes a terminal type, terminal computing power, and terminal storage capacity; the link attribute includes a network characteristic of a link and a non-network characteristic of the link; the network characteristic of the link includes a bandwidth and a delay of the link, and the non-network characteristic of the link includes expense and a distance of the link.

The physical matching unit 33 is configured to obtain multiple matching resources in the cloud network according to a subgraph isomorphism algorithm, where the matching resources correspondingly match the node attribute, the link attribute and the adjacent matrix of the customized network.

The result estimating unit 34 is configured to select one of the multiple matching resources as a VPC into which the customized network migrates.

Further, the result estimating unit 34 is specifically configured to select one of the multiple matching resources as the VPC into which the customized network migrates according to the node attribute and the link attribute of the matching resources.

Further, the apparatus may further include a logical matching unit 35. The logical matching unit 35 is configured to acquire an initial resource that is in the cloud network and matches the node attribute of the customized network if no matching resource that correspondingly matches the node attribute, the link attribute and the adjacent matrix of the customized network is found in the cloud network; calculate a shortest path in the initial resource, where the shortest path is a multi-hop path satisfying the link attribute of the customized network; and determine a matching resource containing the shortest path.

Further, the apparatus may further include a state updating unit 36. The state updating unit 36 is configured to update, after one of the multiple matching resources is selected as the VPC into which the customized network migrates, the node attribute, the link attribute and the adjacent matrix of the cloud network according to the matching resource used as the VPC into which the customized network migrates.

In the apparatus for resource matching in VPC migration according to this embodiment, a topology abstraction unit, a physical matching unit, and the like are set, so as to calculate resources matching the customized network according to the subgraph isomorphism algorithm; moreover, the network security device is also abstracted into a node. All matching results can be obtained at the same time, and a cloud computing provider may select an optimal solution therein, so that the matching result for VPC migration is more beneficial, and the requirement for guaranteeing network security is satisfied.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk or an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that they may still make modifications to the technical solutions described in the foregoing embodiments, or make equivalent replacements to some technical features thereof; without departing from the spirit and scope of the technical solutions of the embodiments of the present invention.

**Claims**

1. A method for resource matching in virtual private cloud (VPC) migration, comprising:

    acquiring a node attribute, a link attribute and an adjacent matrix of a customized network requiring a VPC migration according to a VPC migration request, wherein the node attribute comprises a network security device attribute of the customized network, and further acquiring a node attribute, a link attribute and an adjacent matrix of a cloud network in which the VPC is located, wherein the adjacent matrices are used for indicating a connection between nodes; and obtaining multiple matching resources in the cloud network according to a subgraph isomorphism algorithm, wherein the matching resources correspondingly match the node attribute, the link attribute and the adjacent matrix of the customized network, and selecting one of the multiple matching resources as a VPC into which the customized network migrates.

2. The method for resource matching in VPC migration according to claim 1, wherein the node attribute further comprises a terminal server attribute of the customized network; the terminal server attribute comprises a terminal type, terminal computing power, and terminal storage capacity; and the link attribute comprises a network characteristic of a link and a non-network characteristic of the link, the network characteristic of the link comprises a bandwidth and a delay of the link, and the non-network characteristic of the link comprises expense and a distance of the link.

3. The method for resource matching in VPC migration according to claim 1, wherein the selecting one of the multiple matching resources as a VPC into which the customized network migrates comprises:

    selecting one of the multiple matching resources as the VPC into which the customized network migrates according to the node attribute and the link attribute of the matching resources.

4. The method for resource matching in VPC migration according to claim 1, further comprising: if no matching resource that correspondingly matches the node attribute, the link attribute and the adjacent matrix of the customized network is found in the cloud network, acquiring an initial resource that is in the cloud network and matches the node attribute of the customized network; and calculating a shortest path in the initial resource, wherein the shortest path is a multi-hop path satisfying the link attribute of the customized network; and determining a matching resource containing the shortest path.

5. The method according to claim 1, wherein after the selecting one of the multiple matching resources as a VPC into which the customized network migrates, the method further comprises:

    updating the node attribute, the link attribute and the adjacent matrix of the cloud network according to the matching resource used as the VPC into which the customized network migrates.

6. An apparatus for resource matching in VPC migration, comprising:

    a request processing unit, configured to receive a VPC migration request; a topology abstraction unit, configured to acquire a node attribute, a link attribute and an adjacent matrix of a customized network requiring VPC migration according to the VPC migration request, wherein the node attribute comprises a network security device attribute of the customized network, and further acquire a node attribute, a link attribute and an adjacent matrix of a cloud network in which the VPC is located, wherein the adjacent matrices are used for indicating a connection between the nodes; a physical matching unit, configured to obtain multiple matching resources in the cloud network according to a subgraph isomorphism algorithm, wherein the matching resources correspondingly match the node attribute, the link attribute and the adjacent matrix of the customized network; and a result estimating unit, configured to select one of the multiple matching resources as a VPC into which the customized network migrates.

7. The apparatus for resource matching in VPC migration according to claim 6, wherein the node attribute further comprises a terminal server attribute of the customized network; the terminal server attribute comprises a terminal type, terminal computing power, and terminal storage capacity; and the link attribute comprises a network characteristic of a link and a non-network characteristic of the link, the network characteristic of the link comprises a bandwidth and a delay of the link, and the non-network characteristic of the link comprises expense and a distance of the link.

**8.** The apparatus for resource matching in VPC migration according to claim 6, wherein the result estimating unit is specifically configured to:

select one of the multiple matching resources as the VPC into which the customized network migrates according to the node attribute and the link attribute of the matching resources.

**9.** The apparatus for resource matching in VPC migration according to claim 6, further comprising:

a logical matching unit, configured to acquire an initial resource that is in the cloud network and matches the node attribute of the customized network if no matching resource that correspondingly matches the node attribute, the link attribute and the adjacent matrix of the customized network is found in the cloud network; and calculate a shortest path in the initial resource, wherein the shortest path is a multi-hop path satisfying the link attribute of the customized network; and determine a matching resource containing the shortest path.

**10.** The apparatus for resource matching in VPC migration according to claim 6, further comprising:

a state updating unit, configured to update, after one of the multiple matching resources is selected as the VPC into which the customized network migrates, the node attribute, the link attribute and the adjacent matrix of the cloud network according to the matching resource used as the VPC into which the customized network migrates.

101

Acquire node attributes, link attributes and adjacent matrixes of a customized network and a cloud network according to a VPC migration request

102

Obtain multiple matching resources in the cloud network according to a subgraph isomorphism algorithm, where the matching resources correspondingly match the node attribute, the link attribute and the adjacent matrix of the customized network

103

Select one of the multiple matching resources as a VPC into which the customized network will migrate

FIG. 1

201

Receive a VPC migration request

202

Acquire node attributes, link attributes, and adjacent matrixes of a cloud network in which a VPC is located and a customized network

203

Determine whether any physical isomorphic matching resource that is obtained according to the above subgraph isomorphism algorithm exists in the cloud network

204

Determine whether M' has a matching resource that satisfies logical isomorphism with the subgraph

205

Select one of multiple matching resources as a VPC into which the customized network migrates

Matching for the VPC migration has no solution

FIG. 2

FIG. 3

# INTERNATIONAL SEARCH REPORT

| International application No. |
|---|
| **PCT/CN2011/080464** |

## A. CLASSIFICATION OF SUBJECT MATTER

H04L 29/08 (2006.01) i

According to International Patent Classification (IPC) or to both national classification and IPC

## B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CPRSABS, CNTXT, CNKI: cloud, match, migration, customizing, VPC, subgraph isomorphism

VEN: cloud?, migrat+, subgraph w isomorphism

## C. DOCUMENTS CONSIDERED TO BE RELEVANT

| Category* | Citation of document, with indication, where appropriate, of the relevant passages | Relevant to claim No. |
|---|---|---|
| A | CN 102196049 A (PEKING UNIVERSITY), 21 September 2011 (21.09.2011), the whole document | 1-10 |
| A | CN 101969475 A (ZHANG, Jun), 09 February 2011 (09.02.2011), the whole document | 1-10 |
| A | CN 101404040 A (SOUTHERN POWER GRID TECHNOLOGY RESEARCH CENTER), 08 April 2009 (08.04.2009), the whole document | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 June 2012 (21.06.2012) | **05 July 2012 (05.07.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LUO, Fangjie** Telephone No.: (86-10) **62411278** |

Form PCT/ISA/210 (second sheet) (July 2009)

## INTERNATIONAL SEARCH REPORT
Information on patent family members

| | | International application No. |
|---|---|---|
| | | **PCT/CN2011/080464** |

| Patent Documents referred in the Report | Publication Date | Patent Family | Publication Date |
|---|---|---|---|
| CN 102196049 A | 21.09.2011 | None | |
| CN 101969475 A | 09.02.2011 | None | |
| CN 101404040 A | 08.04.2009 | CN 101404040 B | 28.07.2010 |

Form PCT/ISA/210 (patent family annex) (July 2009)